# EUROPÄISCHE PATENTSCHRIFT

(11) **EP 3 973 753 B1**
(45) Veröffentlichungstag und Bekanntmachung des Hinweises auf die Patenterteilung: **17.07.2024**
(21) Anmeldenummer: 21020485.5
(22) Anmeldetag: 27.09.2021
(51) Int. Cl.: A01B 1/24, A01D 7/06, A01B 1/20

(54) **ROLLRASENVERLEGERECHEN**
RAKE FOR LAYING ROLLED TURF
RÂTEAU DE POSE DE GAZON EN ROULEAU

(30) Priorität: 28.09.2020 DE 202020105534 U
(43) Veröffentlichungstag der Anmeldung: 30.03.2022
(73) Patentinhaber: Ziegler, Heinz, 94110 Wegscheid (DE)
(72) Erfinder: Ziegler, Heinz, 94110 Wegscheid (DE)
(74) Vertreter: Faul, Claus-Peter

(56) Entgegenhaltungen:
- DE-U1- 8 405 319
- GB-A- 2 240 700
- US-A- 1 137 825
- US-A- 524 215

## Beschreibung

Die Erfindung betrifft einen Rollrasenverlegerechen mit einer Trägerleiste, von der Zinken abstehen und an der ein Stiel befestigt ist.

Zur schnellen Begrünung von privaten Gärten, Aussenanlagen von Ein- oder Mehrfamilienhäusern, im Wohnungsbau oder auch in Außenanlagen von Städten und Gemeinden, Sportplätzen oder Golfanlagen werden immer häufiger Rollrasen oder Fertigrasen verlegt. Während ein gesäter Rasen vor allem in der Anfangszeit sehr gut gepflegt und regelmäßig gewässert werden muss, bis die Saat aufgeht, kann mit einem Rollrasen eine größere Fläche innerhalb kürzester Zeit in eine begehbare Wiese verwandelt werden.

Zudem werden auch zunehmend Blumenwiesen, Duftrasen und Rasen mit Kräutern als fertige Rollrasen angeboten und verlegt, auch wo niemand damit rechnet wie z. B. auf Flachdächern von Hochhäusern in der Stadt und auf Industriegebäuden sowie Tiefgaragen.

Die größten Vorteile von Rollrasen gegenüber einem angesäten Rasen sind, dass sofort die Rasenfläche geschlossen ist; optisch ist der Rasen sofort fertig und nach wenigen Tagen auch fest verwurzelt und benutzbar. Der Beregnungsaufwand (zeit- und wassersparend) und der Pflegeaufwand sind relativ kurz und gering im Vergleich zur herkömmlichen Aussaat bis zum abnahmefertigen Zustand, und das Risiko, dass das Saatgut bei einem Starkregen abgeschwemmt oder bei einem Sturm verblasen wird, minimiert sich stark. Zudem soll eine Aussaat im Sommer bei hohen Temperaturen nicht durchgeführt werden, da der Samen während der Keimung sehr schnell vertrocknet. Rollrasen hingegen kann vom trockenen Frühjahr über die heißen Sommertage bis in den frostfreien Winter hinein verlegt werden.

Rasenrollen müssen sorgsam und zügig verlegt werden, vorzugsweise innerhalb von 24 Stunden, um ein Gären des Rasens zu vermeiden. Bei sommerlichen Temperaturen über 25°C sollte der Rollrasen schon nach 12 Stunden verarbeitet worden sein.

Rollrasen wird immer mehr zur Standardbegrünung verwendet und die Nachfrage steigt ständig. Laut DRV (Deutscher Rollrasen-Verband e.V. mit Sitz in Grünberg) werden in Deutschland jährlich ca. 2800 Hektar Fläche zur Rollrasenproduktion verwendet. Das entspricht rund 28 Millionen qm oder 28.000.000 Rollen mit je 1qm (abzüglich Großrollen), welche zu verlegen sind. Der körperliche Aufwand der verlegenden Personen ist hoch, anstrengend und mit vielen knienden und gebückten Arbeiten verbunden.

Standardisierte Rasenrollen von 1 m² sind bei einer Stärke von ca. 2cm etwa 2,44 m lang und 0,41 cm breit, was einer Fläche von etwa 1 m² entspricht. Bei einem Gewicht einer derartigen Rasenrolle von 15 bis 20 kg kann diese noch leicht von Hand transportiert werden. Wenn am Tag 150 m² verlegt werden, muss allerdings ein Arbeiter insgesamt 3 t vom Lade- zum Verlegeort transportieren.

Während für großflächige Rasenanlagen wie etwa in Fussballstadien die Rasenrollen maschinell verlegt werden, ist ein Maschineneinsatz im Bereich von Gärten und Parkanlagen zu aufwendig und kostspielig, so dass hier die Verlegung manuell und mit einfachen Hilfsmitteln wie Rollrasenverlegerechen und Rollrasenmessern von einem Arbeiter durchgeführt werden. Aufgrund der gebückten Arbeitshaltung und des Tragens der Lasten (im obigen Beispiel bis zu 3 t täglich) ist die Arbeitsbelastung in einer gebückten Arbeitshaltung vor allem für den Rücken des Arbeiters beschwerlich und auf Dauer auch gesundheitsschädlich. Hinzu kommt, dass die Tätigkeiten regelmäßig nicht in aufrechter Körperhaltung durchgeführt werden können, sondern der Arbeiter sich häufig bücken oder sogar knien muss. Die Arbeit ist daher körperlich anstrengend und erfordert einen erheblichen Zeitaufwand.

Um einen Rollrasen zu verlegen, müssen zunächst die Rasenrollen von einem Lastwagen zur Verlegungsstelle getragen werden, was von Hand erfolgt, weil der Einsatz von Schubkarren problematisch ist, da diese auf dem frisch geebneten Boden Spuren hinterlassen und auf dem bereits verlegten Rollrasen nicht bewegt werden können.

Die abgeladenen Rasenrollen werden an der zu verlegenden Stelle ausgerollt, was von einem Arbeiter meistens in gebückter Haltung durchgeführt wird. Nach dem Ausrollen muss die Rasenrolle ausgerichtet und gestaucht werden. Das Ausrichten erfolgt in stehender Haltung, weil hier der Arbeiter einen Rollrasenverlegerechen zum Einsatz bringen kann, mit dem er die Rasenrolle in die gewünschte Endposition zieht, wozu er die Zinken des Rechens in die ausgerollte Rasenrolle drückt. Beim anschließenden Herausziehen der Zinken aus der noch feuchten Rasenrolle lässt es sich nicht vermeiden, dass einzelne Rasenpflanzen mit ihrem feinen Wurzelwerk durch eine ungeschickte Bewegung mit herausgerissen werden, insbesondere dann, wenn die Rechenzinken nicht in einem optimalen Winkel herausgezogen werden. Beim Abziehen der Zinken wird die Rasenrolle an der erfassten Stelle zusätzlich kurz angehoben, was der Struktur des Fertigrasens nicht dienlich ist.

Das Stauchen der Rasenrolle erfolgt mit dem Rechen in stehender Haltung des Arbeiters. Hierzu schiebt dieser die ausgelegte Rasenrolle mit Hilfe des Rückens der Trägerleiste zu einer glatten Fläche zusammen, wobei vor allem an den Kanten ein Stauchen sinnvoll und notwendig ist, da die Rasenrolle beim Trocknen schrumpft, was an den Stoßkanten zu unschönen Fugen führen würde.

Abschließend werden die Kanten der Rasenrolle mit einem gesonderten Rollrasenmesser zugeschnitten, was wiederum in gebückter Haltung erfolgt.

Zusammenfassend ist festzustellen, dass die Arbeiten zur Verlegung eines Rollrasens zeitaufwendig und beschwerlich sind, weil der Arbeiter sich ständig bücken und wieder aufstehen muss.

Der Oberbegriff des Anspruchs 1 geht aus von der am nächsten kommenden Druckschrift US 524 215, obwohl diese und alle weiteren Entgegenhaltungen keinen Rollrasenverlegerechen betreffen, sondern einen konventionell für die Gartenarbeit verwendeten Rechen mit unterschiedlich langen Zinken. Diese sind zur Unterscheidung im Kennzeichen des Anspruchs 1 als (kurze) Verschiebezinken und als (längere) Hebezinken bezeichnet.

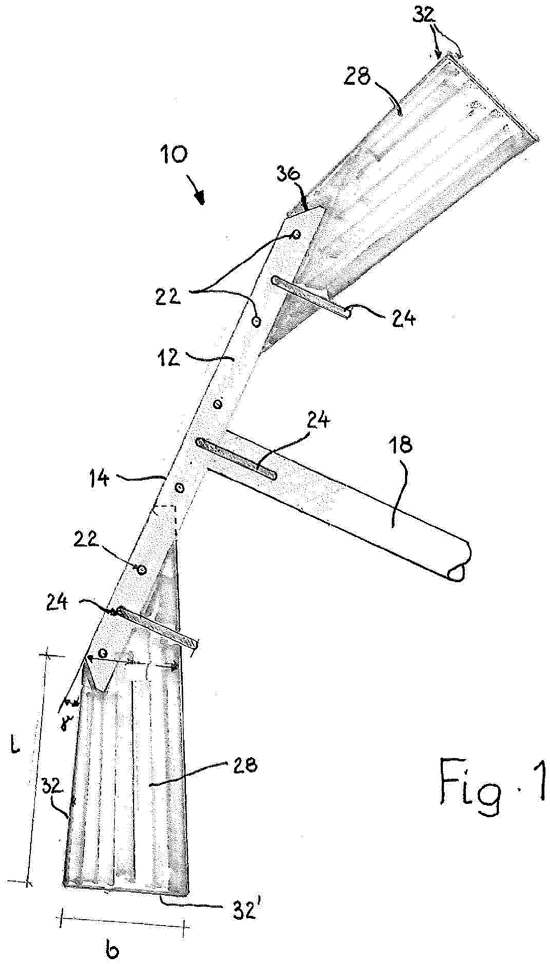

Die unterschiedlich langen Zinken des bekannten Rechens sind allerdings paarweise einstückig miteinander ausgebildet und bilden damit gabelförmige Doppelzinken B, die von einer gemeinsamen Trägerleiste A nach unten abstehen. Diese ist an einem Stiel C gehalten, über den sie je nach Einsatzzweck in zwei entgegengesetzten Richtungen verwendet werden können, abhängig davon, ob die langen Zinken den Rasen pflegen sollen ("ordinary gardening purposes") oder die kurzen Zinken Laub o. dgl. ("remove leaves or other foreign matter from the lawn") aufnehmen sollen. Hierzu muss die Stielhülse (socket C) um den "pivot point = rivet 13" gemäß Figur 1 um 180° geschwenkt werden.

Aus DE 84 05 319.4 ist ein auch hier herkömmlicher Rasenrechen ohne Rollrasenverlegefunktion bekannt, der wie ein Fächerbesen gehandhabt werden kann und hierzu elastisch verformbare Zinken, die paarweise einstückig aus Federstahlstreifen bestehen, so dass eine Belüftungs- und Vertikutierwirkung erreicht werden kann.

In US 1 137 825 ist ein selbstreinigender Rechen beschrieben und dargestellt, bei dem V-förmig abgewinkelte Doppelzinken gleicher Länge um eine Achse schwenkbar sind, so dass beim Anheben des Rechens zwischen den Zinken eingeklemmtes Heu, Laub o. dgl. allein durch die Schwerkraft mittels eines kammartigen Elementes abgestreift wird.

Gegenstand der GB 2 240 700 ist schließlich ein herkömmlicher Rechen, von dem an einer Seite eine Messerklinge absteht.

Gegenstand der DE 43 23 986 A1 ist ein Rechen (Harke), bei dem zwischen den Zinken Abstreifer angeordnet sind, die manuell von einer Schwenkvorrichtung betätigt werden können, um zwischen den Zinken eingeklemmtes Gut zu entfernen.

Aus dem Gebrauchsmuster DE 295 05 599.5 ist eine Harke zum Sammeln von halmförmigem Gut durch kehrende Bewegung bekannt, deren Wirkungsgrad durch Doppelzinken verbessert werden soll.

Der Erfindung liegt die Aufgabe zugrunde, einen Rollrasenverlegerechen zur Verfügung zu stellen, der es erlaubt, dass ein Arbeiter seine Tätigkeit zeitsparend überwiegend in stehender Haltung ohne häufiges "rauf und runter" durchführen kann; die Qualität und die Genauigkeit des verlegten Rasens soll dabei nicht beeinträchtigt werden.

Zur Lösung dieser Aufgabe dient ein Rollrasenverlegerechen mit den Merkmalen des Anspruchs 1. Vorteilhafte Weiterbildungen sind Gegenstand der Unteransprüche.

Bei Einsatz eines erfindungsgemäß ausgebildeten Rollrasenverlegerechens muss sich der Arbeiter im wesentlichen nur einmal bücken, nämlich bei der Ablage der Rasenrolle. Danach kann er mit dem stabilen Rollrasenrechen die Rasenrolle ausrollen und mit den kurzen Verschiebezinken in die gewünschte Position schieben oder ziehen. Wie erwähnt, können bei bekannten Rollrasenrechen, bei denen die von der Trägerleiste abstehenden Zinken ausschließlich gerade sind, beim Herausziehen der Zinken Beschädigungen an dem ausgelegten Rollrasen nicht vermieden werden, weil die Zinken nicht immer leicht herausgezogen werden können, sondern den Rollrasen etwas anheben, was Beschädigungen verursacht. Um diesen Nachteil zu vermeiden, hat der Rollrasenverlegerechen gemäß der Erfindung neben den kurzen Verschiebezinken auch längere Hebezinken, die beim Herausziehen der kurzen Zinken eine Hebelkraft ausüben, die das schonende Herausziehen erleichtern.

Nach dem Herausziehen der Zinken kann dann das ausgelegte Rollrasenstück mittels eines vorzugsweise abgerundeten Rückens der Trägerleiste in die gewünschte Endstellung geschoben werden, damit an den Stößen eine Stauchung erfolgt und unschöne Fugenbildungen verhindert werden.

Nachdem die Rollen verlegt sind, müssen der Rand oder die Konturen eingeschnitten werden. Hierzu wird meist ein handelsübliches stabiles Küchenmesser oder ähnliches Werkzeug eingesetzt. Der Anwender muss sich wiederum bücken oder schneidet in kniender Haltung den Rasen mit dem Messer ein.

Mit den beidseitig abstehenden Schnittmessern des Rollrasenverlegerechens gemäß der Erfindung kann diese Arbeit in nahezu aufrechter Körperhaltung durchgeführt werden. Hierzu muss nicht einmal das Werkzeug abgelegt oder gewechselt werden, was wiederum weniger Bewegungsarbeit und weniger Zeitverlust mit sich bringt.

Es ist daher von Vorteil, wenn von den beiden Enden der Trägerleiste Schnittmesser abstehen, die in einer gemeinsamen Ebene liegen, welche etwa parallel zur Mittelebene des Stiels verläuft. Mit Hilfe dieser Schnittmesser kann auch nach dem Verlegen des Rollrasens der Arbeiter in stehender Haltung eine scharfe Kante erzeugen, wozu das Schnittmesser vertikal durch die Rasenkante gestochen wird.

Die Kombination des Rollrasenverlegerechens mit daran angebrachten Schnittmessern begünstigt die rasche Verlegung und Größenanpassung in aufrechter Stellung. Ein gesondertes Stechmesser ist für diese Arbeit nicht erforderlich.

Die Erfindung ist nachstehend an Ausführungsbeispielen erläutert, die in der Zeichnung dargestellt sind. In dieser zeigen:
Figur 1 die Unteransicht eines Rollrasenverlegerechens gemäß der Erfindung,
Figur 2 eine perspektivische Ansicht des Rollrasenverlegerechens,
Figur 3 eine Querschnittsdarstellung des Rollrasenverlegerechens im Bereich einer kurzen Verschiebezinke,
Figur 4 den Querschnitt im Bereich einer langen Hebezinke und
Figur 5 eine abgeänderte Ausführungsform.

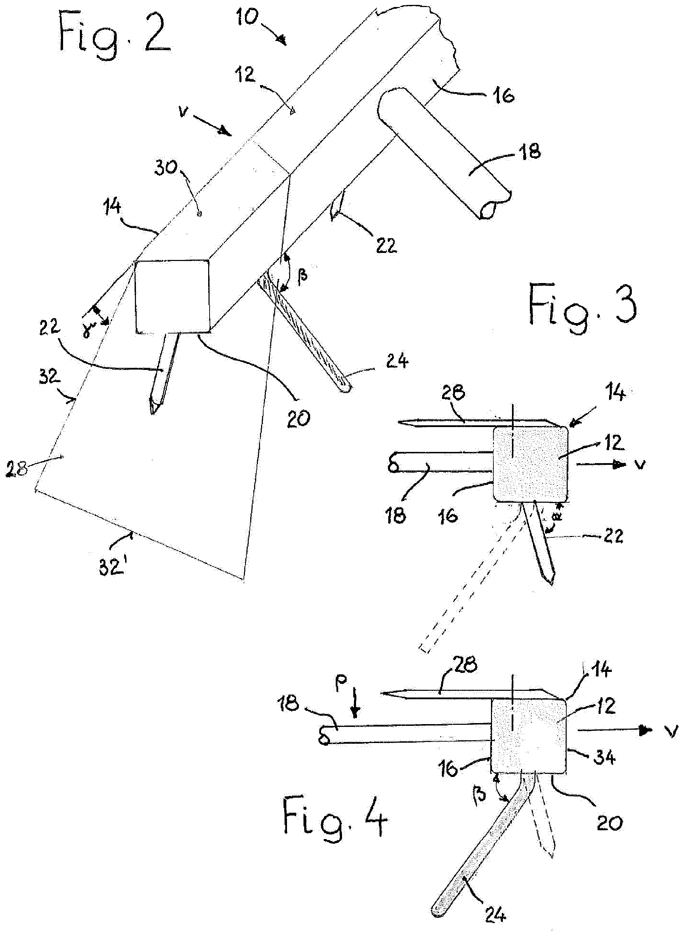

Der in Figur 1 dargestellte Rollrasenverlegerechen 10 gemäß der Erfindung hat eine aus starkem Blech bestehende und im Querschnitt etwa quadratische Trägerleiste 12 mit einem abgerundeten Rücken 14. An der Rückseite 16 der Trägerleiste 12 ist zur Handhabung ein Stiel 18 befestigt, während sich von der Unterseite 20 abwechselnd paarweise kurze Verschiebezinken 22 und lange Hebezinken 24 erstrecken. Die Verschiebezinken 22 sind, wie Figur 3 zeigt, in Verschiebrichtung v mit einem Winkel α von etwa 15° nach vom geneigt, während die längeren Hebezinken 24 gemäß Figur 4 an der Trägerleiste 12 in entgegengesetzter Neigung β von etwa 55° angebracht sind. Die Verschiebezinken 22 und die Hebezinken 24 sind in zueinander parallelen Reihen angeordnet.

Aus dem Beispiel der Figur 1 ergibt sich, dass ingesamt n (hier n = 3) Hebezinken 24 und 2n Verschiebezinken 22 vorgesehen sind.

In den Figuren ist dargestellt, dass an beiden Enden der Trägerleiste 12 auf deren Oberseite 30 Schnittmesser 28 befestigt sind, die aus Platten mit zwei scharfen Kanten 32, 32' bestehen. Die Platten haben eine Länge l von hier 170 mm und eine Breite b von z. B. 80 mm. Beide Schnittmesser 28 liegen in einer gemeinsamen Ebene, die etwa parallel zur Mittelebene des Stiels 18 verläuft. Die vom Stiel 18 abge wandte Vorderseite 34 der Trägerleiste 12 ist glatt und eben, so dass mit deren Hilfe ein Glätten möglich ist.

Im praktischem Einsatz des Rollrasenverlegerechens 10 wird dieser mittels des nach oben geneigten Stiels 18 so über die Rasenfläche geschoben, dass die spitzen Enden der kurzen Verschiebezinken 22 in den Rasenboden dringen. Wenn dann das verlegte Rollrasenstück mit Hilfe des Rollrasenverlegerechens 10 in Richtung v verschoben werden soll, werden die kurzen Zinken 22 des Rechens etwa senkrecht in den Rollrasenboden gestoßen. Die langen Hebezinken 24 dringen bei dieser Bewegung in Richtung v nicht in den Rollrasenboden ein (Figur 3).

In Figur 4 ist angedeutet, dass sich durch leichten Druck p auf den Stiel 18 in Richtung des Bodens das jeweilige Ende der langen Zinken 24 (Hebezinken) am Boden abstützt, so dass beim weiteren Herabdrücken des Stiels 18 die kurzen Verschiebezinken 22 durch die dabei erzeugte Hebelwirkung schonend aus dem Boden herausgezogen werden. Abschließend wird der Rollrasenverlegerechen 10 um die Achse der Trägerleiste 12 gekippt, so dass nun mit Hilfe der Schneidkanten 32, 32' eines der beiden Schnittmesser 28 das verlegte Rasenstück gerade abgetrenn werden kann. Die beiden vorderen Schneidkanten 32 sind relativ zum Rücken 14 der Trägerleiste 12 mit einem Winkel γ von etwa 20° nach hinten geneigt. An den freien Enden der Trägerleiste 12 dienen Schrägflächen 36 zur Höhenbegrenzung der Eindringhilfe des jeweiligen Schnittmessers 28.

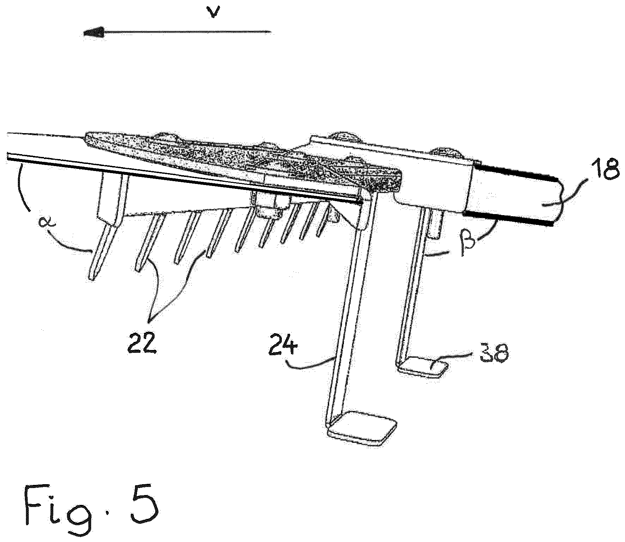

Bei der Variante der Figur 5 stehen von den Enden der Hebezinken 24 etwa rechtwinklig Schaufeln 38 ab, die beim Anheben des Rollrasenbodens eine flächige Abstützung auf dem Untergrund gewährleisten. Der Winkel β beträgt vorzugsweise 90°.

Die Trägerleiste 12 des Rollrasenverlegerechens 10 hat somit zwei Funktionen. Beim Abstechen des Rollrasens dienen ihre Schrägflächen 36 als eine natürliche Höhenbegrenzung durch Anschlag am Boden; die Eindringtiefe ist abhängig von der Körperhaltung des Anwenders. Sollten unter dem Rollrasen bereits Rasenmähroboterkabel im Planum verlegt sein, so werden diese durch die Höhenbegrenzung vor einer Schnittverletzung geschützt.

Daneben dient die glatte Vorderseite 34 der Trägerleiste 12 zum leichten Glätten und Nachplanieren der Rasenfläche.

Die Vorteile der Erfindung lassen sich wie folgt zusammenfassen:
Zum einem sind die Zinken 22, 24 leicht schräg angeordnet, um bei der Arbeit die aufrechte Körperhaltung zu gewährleisten und eine optimale Zug- und Druckhaltung zu bekommen.
Zum Zweiten haben die Verschiebezinken 22 spitze Enden; somit löst sich der Rechen durch die konische Form sehr leicht beim Anheben aus der Rasensode.

Als dritter Vorteil sind abgewinkelte Hebezinken 24 eingebaut. Der Anwender bleibt in aufrechter Körperhaltung und senkt nur den Stiel 18 ab, wodurch sich die geneigten Hebezinken 24 auf der Rasensode abstützen und den Verlegerechen 10 von selbst aus der Rasensode heben, ohne diese dabei anzuheben.

## Patentansprüche

1. Rollrasenverlegerechen mit einer Trägerleiste (12), von deren Unterseite Zinken (22, 24) abstehen und an deren Rückseite (16) ein Stiel (18) befestigt ist, wobei ein Teil der Zinken als kurze Verschiebezinken (22) ausgebildet sind, die in Verschieberichtung (v) schräg nach vom geneigt sind, **dadurch gekennzeichnet, dass** n Hebezinken (24) und 2n Verschiebezinken (22) vorgesehen sind, wobei zwischen jeweils zwei Verschiebezinken (22) eine längere Hebezinke (24) mit entgegengesetzter Neigung angebracht ist.

2. Rollrasenverlegerechen nach Anspruch 1, **dadurch gekennzeichnet, dass** vom unteren Ende der Hebezinken (24) Schaufeln (38) abstehen.

3. Rollrasenverlegerechen nach einem der vorhergehenden Ansprüche, **dadurch gekennzeichnet, dass** von beiden Enden der Trägerleiste (12) zwei flache Schnittmesser (28) abstehen, die auf der Oberseite (30) der Trägerleiste (12) befestigt sind und eine vordere Schneidkante (32) und eine seitliche Schneidkante (32, 32') haben.

4. Rollrasenverlegerechen nach Anspruch 3, **dadurch gekennzeichnet, dass** die Schnittmesser (28) in einer gemeinsamen Ebene liegen, die parallel zur Mittelebene des Stiels (18) verläuft.

5. Rollrasenverlegerechen nach Anspruch 3 oder 4, **dadurch gekennzeichnet, dass** die beiden vorderen Schneidkanten (32) mit einem Winkel (γ) relativ zum Rücken (14) der Trägerleiste (12) nach hinten geneigt sind.

6. Rollrasenverlegerechen nach einem der Ansprüche 3 bis 5, **dadurch gekennzeichnet, dass** die freien Enden der Trägerleiste (12) Schrägflächen (36) zur Höhenbegrenzung der Eindringtiefe der flachen Schnittmesser (28) aufweisen.

## Claims

1. A sod-laying rake comprising a carrier bar (12) from the underside of which tines (22, 24) protrude, and a handle (18) attached to the rear side (16), wherein some of the tines are designed as short pushing tines (22) inclined forward in the pushing direction (v), **characterized in that** n lifting tines (24) and 2n pushing tines (22) are provided, with a longer lifting tine (24) with opposite inclination arranged between each pair of said pushing tines (22).

2. The sod-laying rake according to claim 1, **characterized in that** shovels (38) protrude from the lower end of the lifting tines (24).

3. The sod-laying rake according to one of the preceding claims, **characterized in that** two flat cutting blades (28) protrude from both ends of the carrier bar (12), which are attached to the upper side (30) of the carrier bar (12) and have a front cutting edge (32) and a lateral cutting edge (32, 32').

4. The sod-laying rake according to claim 3, **characterized in that** the cutting blades (28) lie in a common plane parallel to the central plane of the handle (18).

5. The sod-laying rake according to claim 3 or 4, **characterized in that** the two front cutting edges (32) are inclined backward at an angle (γ) relative to the back (14) of the carrier bar (12).

6. The sod-laying rake according to one of claims 3 to 5, **characterized in that** the free ends of the carrier bar (12) have inclined surfaces (36) to limit the penetration depth of the flat cutting blades (28).

## Revendications

1. Râteau pour la pose de gazon en rouleau comprenant une barre porteuse (12) dont le dessous est muni de dents (22, 24) et dont l'arrière (16) est fixé à un manche (18), certaines des dents étant conçues comme des dents de poussée courtes (22) inclinées vers l'avant dans la direction de poussée (v), **caractérisé en ce que** n dents de levage (24) et 2n dents de poussée (22) sont prévues, une dent de levage plus longue (24) avec une inclinaison opposée étant placée entre chaque paire de dents de poussée (22).

2. Râteau pour la pose de gazon en rouleau selon la revendication 1, **caractérisé en ce que** des pelles (38) dépassent de l'extrémité inférieure des dents de levage (24).

3. Râteau pour la pose de gazon en rouleau selon l'une des revendications précédentes, **caractérisé en ce que** deux lames de coupe plates (28) dépassent des deux extrémités de la barre porteuse (12), lesquelles sont fixées sur le dessus (30) de la barre porteuse (12) et comportent un bord de coupe avant (32) et un bord de coupe latéral (32, 32').

4. Râteau pour la pose de gazon en rouleau selon la revendication 3, **caractérisé en ce que** les lames de coupe (28) se trouvent dans un plan commun parallèle au plan central du manche (18).

5. Râteau pour la pose de gazon en rouleau selon la revendication 3 ou 4, **caractérisé en ce que** les deux bords de coupe avant (32) sont inclinés vers l'arrière selon un angle (γ) par rapport au dos (14) de la barre porteuse (12).

6. Râteau pour la pose de gazon en rouleau selon l'une des revendications 3 à 5, **caractérisé en ce que** les extrémités libres de la barre porteuse (12) ont des surfaces inclinées (36) pour limiter la profondeur de pénétration des lames de coupe plates (28).
